# EUROPEAN PATENT APPLICATION

(11) **EP 1 504 727 A1**
(43) Date of publication of application: **09.02.2005**
(21) Application number: 04254621.8
(22) Date of filing: 31.07.2004
(51) Int. Cl.: A61C 15/04

(54) **Coated dental floss**

(30) Priority: 05.08.2003 GB 0318302
(71) Applicant: Peri-dent Limited, Galashiels, Selkirkshire TD1 3RS, Scotland (GB)
(72) Inventor: Roberts, Ian C/O Peri-dent Ltd., Galashiels,Selkirkshire,TD1 3RS Scotland (GB); Hill, James McKenzie C/O Peri-dent Ltd., Galashiels,Selkirkshire,TD1 3RS Scotland (GB)
(74) Representative: Lock, Howard John

(57) **Abstract**

A method of coating a yarn (26) to provide a coated dental floss comprises supplying the yarn from a supply zone (12) through a plurality of stages. At least one of the stages comprises a coating zone (14) to provide the coated dental floss. The method further includes storing the coated dental floss in a storage zone (20). The yarn (26) is under tension through at least one of the stages.

## Description

This invention relates to methods for coating yarn to provide coated dental flosses or tapes. The invention also relates to apparatus for coating yarn to provide coated dental flosses or tapes.

Effective flossing can be carried out by dental flosses which fill the interdental space to allow a more efficient clean above and below the gum line. Many dental floss products are designed to break the interdental contact points of the interdental space. However, such flosses do not fill the interdental space.

According to one aspect of this invention, there is provided a method of coating a yarn to provide a coated dental floss or tape, the method comprising supplying the yarn from a supply zone sequentially through a plurality stages, at least some of the stages comprising coating zones to provide the coated dental floss, and the method further including thereafter storing the coated dental floss in a storage zone, wherein the yarn is under tension through at least one of the stages. A tensioning arrangement is preferably provided to tension the yarn.

According to another aspect of this invention, there is provided an apparatus of coating a yarn to provide a coated dental floss or tape, the apparatus comprising a supply zone to feed the yarn, a plurality of stages, at least some of the stages comprising sequentially arranged coating zones through which the yarn can be fed to provide the coated dental floss, and a storage zone to store the coated dental floss, and a tensioning arrangement to tension the yarn through at least one of the stages.

The method may involve passing the yarn through more than two coating zones. Preferably, the method involves passing the yarn through three coating zones. The method may involve passing the yarn through no more than three coating zones.

The yarn is preferably a texturised yarn, and may be a texturised multifilament yarn. The yarn may be formed from a synthetic polymer material, which may be one or more selected from the group comprising nylon and polyesters. Texturised yarns have the property of being thick and/or bulky when the yarn is in a relaxed condition, and thin when the yarn is in a tensioned condition.

The preferred embodiment of the invention provides the advantage that it provides a thin dental floss, which can break interdental contact points and can be inserted into the interdental space. In the preferred embodiment, when the floss has been so inserted, the removal of one or more of the coatings allows the floss to expand and fill the interdental space to allow effective cleaning above and below the gum line.

Preferably, each coating zone comprises a respective different coating material to the, or each, other coating zone.

One of the coating zones may comprise a first coating material. The first coating material may comprise a binder to bind the yarn. Preferably, the yarn is coated in its tensioned state, and the first coating material may assist in binding the yarn in the tensioned state.

The first coating material may comprise a polymeric material, which may be a co-polymer. The first coating material may comprise one or more, or a co-polymer, of ethylvinylacetate (EVA) and polyvinylacetate (PVA). The first coating material may comprise a co-polymer of EVA and PVA. The first coating material may also include a dispersing agent, which may be a polytetrafluoroethylene (PTFE) material. The first coating material may also comprise a wetting agent. The EVA/PVA co-polymer may be sold under the trade mark AIRFLEX EP400. The dispersing agent may comprise a substance sold by DuPont under MP1600.

The first coating material may further include an abrasive to provide a rough surface. The abrasive may comprise pumice. The first coating material may also include active ingredients, for example sodium fluoride, tetrasodium pyrophosphate or cetyl pyridinium chloride.

Another of the coating zones may comprise a second coating material. The second coating may be a material to prevent moisture ingress. The second coating material may comprise a wax. The second coating material is preferably substantially insoluble in water.

Preferably, the second coating material may be of a suitable softness to allow easy removal during flossing. Preferably, the second coating material is suitable to withstand removal during coating in the, or each, subsequent coating zone. Preferably, the second coating material is applied to the yarn in a molten state.

Preferably, the second coating material comprises a food grade wax, which may comprise one or more selected from microcrystalline wax, beeswax, carnauba wax.

Preferably, another of the coating zones comprises a third coating material. The third coating material may comprise a material which is soluble in saliva to protect the first and second coating layers. The third coating material may comprise a wax, and may include adjuvants such as, for example, flavourings, sweeteners, active ingredients. The flavourings may comprise powders and oils. The sweeteners may comprise sodium saccharin, aspartame, sorbitol. The active ingredients may comprise sodium fluoride, tetrasodium pyrophosphate, cetyl pyridiniun chloride. Other adjuvants to the third coating material may comprise silicones, polytetrafluoroethylene, pumice.

In the preferred embodiment, the third coating material may comprise a polyethylene glycol wax, a mint flavouring and a sweetener, which may be sodium saccharin.

The apparatus may comprise the first, second and third coating zones arranged sequentially of each other, with the second coating zone downstream of the first coating zone, and the third coating zone downstream of the second coating zone. The method may involve passing the yarn through the first, second and third coating zones sequentially from the first coating zone, through the second coating zone and thereafter, the third coating zone.

The first coating material may be applied at the first coating zone. The second coating material may be applied at the second coating area. The third coating material may be applied at the third coating zone.

The yarn may extend from the supply zone to the storage zone through each coating zone, preferably one after the other.

Each coating zone may comprise a respective vessel for holding a respective coating material. At least one of the vessels may include a base and at least one sloping side wall extending upwardly from the base. Preferably, each of the vessels comprises a base and a sloping side wall extending upwardly from the base.

Preferably, the, or each, vessel comprises a pair of opposed sloping side walls extending upwardly from the base.

Preferably, the steps of coating the yarn in the coating zones comprises extending the yarn along the opposed side walls and along the base of each vessel.

The apparatus may include a drying arrangement arranged between the first and second coating zones. The method may include heating the yarn in the drying arrangement between the first and second coating zones.

Preferably, the drying arrangement dries the coated yarn and/or fuse the first coating material onto the yarn.

Preferably, the drying arrangement comprises a heating arrangement, which may comprise an oven, through which the yarn can pass.

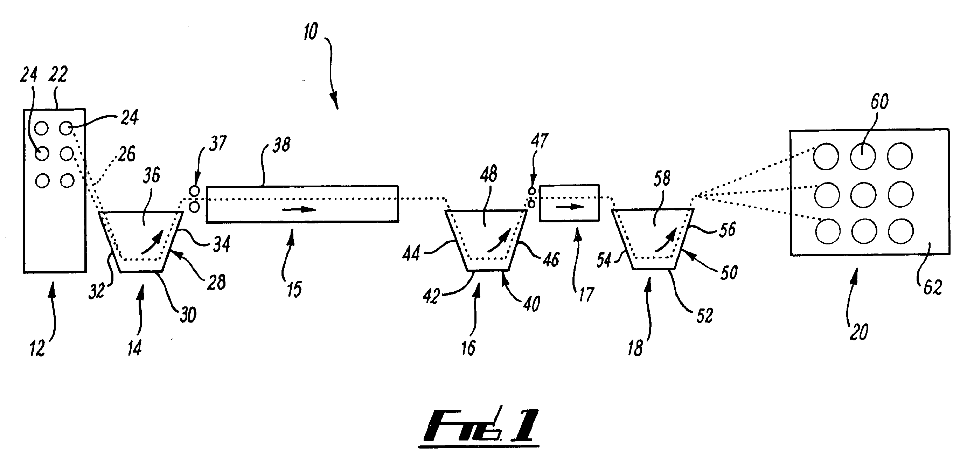

The tensioning arrangement may comprise a drawing assembly down stream of the supply zone. The drawing assembly may comprise a roller assembly, which may comprise a set of rollers arranged up stream or down stream of the drying arrangement to draw the yarn.

The roller assembly may comprise a first set of rollers, which may be arranged up stream of the drying arrangement, and a second set of rollers, which may be arranged down stream of the drying arrangement. Preferably, the second set of rollers are downstream of the second coating zone. Preferably the first and second set of rollers may have a draw ratio of between 1.5:1 and 10:1. Thus, the second set of rollers may rotate at a speed of between 1.5 and 10 times the speed of the first set of rollers. A cooling arrangement may be provided between the second and third coating zones. Preferably, the cooling arrangement cools the molten second coating material applied to the yarn. Preferably, the yarn is fed through the cooling arrangement.

The storage zone may comprise a plurality of storage bobbins onto which the coated yarn may be wound.

The supply zone may comprise a plurality of supply bobbins on which the yarn is wound. Preferably, the method involves coating a plurality of yarns by passing them at the same time as each other through the first, second and third coating zones.

According to another aspect of this invention, there is provided a coated dental floss or tape comprising a texturised yarn in a tensioned condition and a coating material on the yarn to hold the yarn in the tensioned condition, the coating being water insoluble. Thus, in the preferred embodiment, the coating substantially cannot be removed by dissolving in water, and is preferably removable by mechanical scraping of the yarn, such as scraping the yarn on the teeth.

The coating material may comprise a polymeric material, which may be a co-polymer. The coating material may comprise one or more, or a co-polymer, of ethylvinylacetate (EVA) and polyvinylacetate (PVA). The coating material may comprise a co-polymer of EVA and PVA. The coating material may also include a dispersing agent, which may be a polytetrafluoroethylene (PTFE) material. The coating material may also comprise a wetting agent. The EVA/PVA co-polymer may be sold under the trade mark AIRFLEX EP400. The dispersing agent may comprise a substance sold by DuPont under MP1600.

The coating material may further include an abrasive to provide a rough surface. The abrasive may comprise pumice. The coating material may also include active ingredients, for example sodium fluoride, tetrasodium pyrophosphate or cetyl pyridinium chloride.

The yarn may be coated with a second coating material. The second coating material, may be a material to prevent moisture ingress. The second coating material may comprise a wax which is preferably substantially insoluble in saliva.

Preferably, the second coating material may be of a suitable softness to allow easy removal during flossing. Preferably, the second coating material is suitable to withstand removal during coating in the, or each, subsequent coating zone. Preferably, the second coating material is applied to the yarn in a molten state.

Preferably, the second coating material comprises a food grade wax, which may comprise one or more selected from microcrystalline wax, beeswax, carnauba wax.

The yarn may be coated with a third coating material. The third coating material may comprise a material which is soluble in saliva to protect the first and second coating layers. The third coating material may comprise a wax, and may include adjuvants such as, for example, flavourings, sweeteners, active ingredients. The flavourings may comprise powders and oils. The sweeteners may comprise sodium saccharin, aspartame, sorbitol. The active ingredients may comprise sodium fluoride, tetrasodium pyrophosphate, cetyl pyridiniun chloride. Other adjuvants to the third coating material may comprise silicones, polytetrafluoroethylene, pumice.

In the preferred embodiment, the third coating material may comprise a polyethylene glycol wax, a mint flavouring and a sweetener, which may be sodium saccharin.

An embodiment of the invention will now be described by way of example only, with reference to the accompanying drawing, which is a schematic side view of an apparatus for coating a yarn.

Referring to the drawing, there is shown apparatus 10 for coating a yarn to provide a dental floss. The apparatus 10 comprises sequentially a supply zone 12, a first coating zone 14, a drying or heating arrangement 15, a second coating zone 16, a cooling arrangement 17, a third coating zone 18, and a storage zone 20.

The supply zone 12 comprises a first support 22 having rotatably mounted thereon a plurality of supply bobbins 24 upon each of which is wound a texturised yarn 26 which is to be coated to provide the dental floss. The yarn 26 is formed from a synthetic polymer such as nylon and/or polyester. The yarn 26 is preferably a multifilament texturised yarn.

The use of texturised yarn is known, and as an example is described in U.S. patent No. 5830495.

The drawing shows the yarn 26 extending from only two of the supply bobbins 24. It will be appreciated that the yarn 26 will extend from each of the bobbins 24, but is shown extending only from two supply bobbins for reasons of clarity.

The yarn 26 extends from the supply bobbins 24 through the first coating zone 14. The first coating zone 14 comprises a first vessel 28 in the form of a first bath comprising a base 30 and upstanding, opposed, outwardly sloping side walls 32, 34 on the base 30. The yarn 26 extends down the first side wall 32, across the base 30 and up the second side wall 34. The first vessel 28 is provided with a first coating material 36, which coats the yarn 26 to provide a first coating on the yarn as it passes through the first vessel 28. The first coating material is described in more detail below.

A first roller assembly is provided up stream adjacent to the first vessel 28 and comprises a first set of rollers 37. The first set of rollers 37 rotate at a first speed in a manner so as to draw the yarn from the supply bobbins 24 through the first vessel 28 and thereafter push the yarn through the heating arrangement 15.

After exiting the first coating zone 14, the yarn 26 passes through the heating arrangement 15. The heating arrangement 15 comprises an oven 38 which dries the first coating material on the yarn 26 and fuses the first coating material to the yarn 26.

After exiting the heating arrangement 38, the yarn 26 passes to the second coating zone 16, which comprises a second vessel 40 in the form of a second bath which is generally the same as the first vessel 28, and comprises a base 42 and a first and second outwardly sloping sides 44, 46 extending upwardly from the base 42. A second coating material 48 is provided within the second vessel 42. The yarn 26 extends down the first side wall 44 of the second vessel 40, across the base 42 and up the second side wall 46. The second vessel 40 is provided with a second coating material (described below) which coats the yarn 26 with a second coating, on the first coating on the yarn 26 as the yarn 26 passes through the second vessel 40. A second roller assembly is provided down stream adjacent to the second vessel 40 and comprises a second set of rollers 47. The second set of rollers 47 rotate at a second speed which is faster than the first speed of the rollers 37. The second set of rollers 47 rotate at a speed of substantially 1½ to 10 times the speed of the first set of rollers 37 to provide a draw ratio of 1.5:1. The second set of rollers 47 rotate in a manner so as to draw the yarn through the heating arrangement 15 and the second vessel 40 and to push the yarn 26 through the rest of the apparatus 10 to the storage zone 20.

After exiting the second coating zone 16, the yarn 26 passes through the cooling arrangement 17, and thereafter to the third coating zone 18. The third coating zone 18 comprises a third vessel 50 in the form of a third bath. The third vessel 50 comprises a base 52 and opposed outwardly sloping side walls 54, 56 extending upwardly from the base 52. The third vessel 50 is provided with a third coating material 58, to provide a third coating on the yarn 26 over the second coating.

After exiting the third coating zone 18, the yarn 26 passes to the storage zone 20 which comprises a plurality of storage bobbins 60 upon respective ones of which the yarn 26 is wound. The bobbins 60 are rotatably mounted upon a bobbin holding arrangement 62. Each of the bobbins 60 is rotatably driven by a suitable drive assembly (not shown) within the bobbin holding arrangement 62. Thus, the rotation of the bobbins 60 by the bobbin drive arrangement pulls the yarn 26 through the components of the apparatus 10.

The first coating material 36 described above comprises a binder to bind the fibres of the yarn in its tensioned state. The preferred embodiment of the binder of the first coating material 36 comprises a co-polymer of ethylvinylacetate (EVA) and polyvinylacetate (PVA). The first coating material may also include a polytetrafluoroethylene (PTFE) dispersion and a wetting agent.

The first coating material 36 is provided as a dispersion in water. The water is dried from the yarn 26 by the passage of the yarn 26 through the oven 38. The fist coating material 36 is a heat fusible material and is fused onto the yarn by the heat from the oven 38 as the yarn passes through the oven 38.

The first coating material 36 may include adjuvants, for example silicones, an abrasive such as pumice, and active ingredients such as sodium fluoride, tetrasodium pyrophosphate, and cetyl pyridinium chloride. The first coating material 36 may comprise a wetting agent.

The second coating material 48 may comprise a wax which is substantially insoluble in saliva. The purpose of this is to prevent moisture ingress into the yarn. A suitable wax for use as the second coating should have an appropriate softness to allow easy removal during flossing, but is able to withstand the third coating step. The second coating material 48 is provided in its molten form in the second bath 40, and is cooled on the yarn 26 by the cooling arrangement 17.

An example of a suitable wax for use in the second coating 48 is a microcrystalline wax. Examples of other suitable wax are beeswax and carnauba wax.

The third coating material 38 may comprise a wax which is soluble in saliva and is provided to protect the first and second coatings during winding onto the storage bobbin 60. The third coating material is provided to dissolve during flossing to expose the second coating.

The preferred third coating material comprises a polyethylene glycol (PEG) wax. The third coating material may comprise adjuvants such as flavourings, for example a mint flavouring, which may be in the form of powders and/or oils, a sweetener, for example sodium saccharin, aspartame, and sorbitol, and active ingredients such as sodium fluoride, tetrasodium pyrophospate and cetyl pyridinium chloride. Other adjuvants such as silicones, polytetrafluoroethylene and an abrasive such as pumice can also be provided.

There is thus described a process and an apparatus for coating a yarn, the preferred embodiments of which are for coating texturised yarn. This type of yarn is of a "fluffy" or texturised condition, and requires to be coated before it can be used as a dental floss. The diameter and/or thickness of the yarn is reduced by the coating so that the dental floss so produced has the same general size and shape of normal dental floss and can be slid more easily between the teeth than non-coated texturised yarns.

The outer, or third, coating material 58 on the yarn is a wax which is soluble in water and is dissolved by saliva when the floss is dispersed in the mouth.

The middle, or second, coating material 48 is a wax which is insoluble in water and therefore not removed by saliva when the floss is disposed in the mouth. However, the second coating material can be removed by the mechanical action of flossing. This is advantageous, because the removal of the second coating material can result in the texturised yarn expanding to its non-coated or texturised condition. This provides an advantage in the preferred embodiment that, when the floss is between the teeth, the coatings are removed to allow the floss to expand to its texturised condition. This enables the floss to fill the interdental space thereby providing effective cleaning of all tooth surfaces above and below the gum line.

The preferred embodiment has a water insoluble coating which holds the yarn in its thin condition. This coating is removed by the mechanical action of the floss scraping against the teeth. Some prior art flosses use a single water soluble coating to be removed by saliva when the floss is disposed in the mouth. This is disadvantageous because, in humid conditions, water soluble coatings can dissolve, resulting in the floss expanding to its texturised condition before it is used.

Various modifications can be made without departing from the scope of the invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of coating a yarn to provide a coated dental floss or tape, the method comprising supplying the yarn from a supply zone sequentially through a plurality stages, at least one of the stages comprising a coating zone to provide the coated dental floss, and the method further including thereafter storing the coated dental floss in a storage zone, wherein the yarn is under tension through at least one of the stages.

2. A method of coating a yarn according to Claim 1 wherein a tensioning arrangement is provided to tension the yarn.

3. A method of coating a yarn according to Claim 1 or 2 wherein the method comprises supplying the yarn through a plurality of stages, at least some of the stages comprising coating zones.

4. A method of coating a yarn according to Claim 3 wherein the method involves passing the yarn through more than two coating zones.

5. A method of coating a yarn according to Claim 4 wherein the method involves passing the yarn through three coating zones.

6. A method of coating a yarn according to any preceding Claim wherein the yarn is a texturised yarn.

7. A method of coating a yarn according to Claim 6 wherein the yarn is formed from a synthetic polymer material, which comprises one or more selected from the group consisting of nylon and polyesters.

8. A method of coating a yarn according to Claim 3, 4 or 5 wherein one of the coating zones comprises a first coating material, the first coating material comprising a binder to bind the yarn, the yarn being coated in its tensioned state, and the first coating material assists in binding the yarn in the tensioned state.

9. A method of coating a yarn according to Claim 8 wherein the first coating material comprises one or more, or a co-polymer, of ethylvinylacetate (EVA) and polyvinylacetate (PVA).

10. A method of coating a yarn according to Claim 9 or 10 wherein the first coating material also includes a dispersing agent, and a wetting agent.

11. A method of coating a yarn according to any of Claims 8 to 10 wherein the first coating material further includes an abrasive to provide a rough surface.

12. A method of coating a yarn according to any of Claims 9 to 11 wherein another of the coating zones comprises a second coating material, the second coating comprising a material to prevent moisture ingress.

13. A method of coating a yarn according to Claim 12 wherein the second coating material comprises a wax which is substantially insoluble in saliva.

14. A method of coating a yarn according to Claim 12 or 13 wherein the second coating material comprises a food grade wax, which comprises one or more selected from microcrystalline wax, beeswax, carnauba wax.

15. A method of coating a yarn according to any of Ciaims 8 to 14 wherein another of the coating zones comprises a third coating material, the third coating material comprising a material which is soluble in saliva to protect the first and second coating layers.

16. A method of coating a yarn according to Claims 14 or 15 wherein the method involves passing the yarn through the first, second and third coating zones sequentially from the first coating zone, through the second coating zone and thereafter, the third coating zone.

17. A method of coating a yarn according to Claim 16 wherein each coating zone comprises a respective vessel for holding a respective coating material, at least one of the vessels including a base and at least one sloping side wall extending upwardly from the base, and the steps of coating the yarn in the coating zones comprise extending the yarn along the opposed side walls and along the base of each vessel.

18. A method of coating a yarn according to any of Claims 12 to 17 including a drying arrangement arranged between the first and second coating zones, the method including heating the yarn in the drying arrangement between the first and second coating zones.

19. A method of coating a yarn according to Claim 18 wherein the tensioning arrangement comprises a drawing assembly down stream of the supply zone, the drawing assembly comprising a first set of rollers, which are arranged up stream of the drying arrangement, and a second set of rollers, which are arranged down stream of the drying arrangement, and have a draw ratio of between 1.5:1 and 10:1.

20. A method of coating a yarn according to any of Claims 15 to 19 wherein a cooling arrangement is provided between the second and third coating zones.

21. An apparatus of coating a yarn to provide a coated dental floss or tape, the apparatus comprising a supply zone to feed the yarn, a plurality of stages, at least one of the stages comprising a coating zone through which the yarn can be fed to provide the coated dental floss, and a storage zone to store the coated dental floss, and a tensioning arrangement to tension the yarn through at least one of the stages.

22. Apparatus according to Claim 21 comprising a plurality of stages, wherein at least some of the stages comprise sequentially arranged coating zones.

23. Apparatus according to Claim 21 or 22 wherein the yarn comprises a texturised yarn.

24. Apparatus according to Claim 23 wherein the yarn is formed from a synthetic polymer material, which comprises one or more selected from the group consisting of nylon and polyesters.

25. Apparatus according to Claim 22, 23 or 24 wherein one of the coating zones comprises a first coating material, the first coating material comprising a binder to bind the yarn, the yarn being coated in its tensioned state, and the first coating material assists in binding the yarn in the tensioned state.

26. Apparatus according to Claim 25 wherein the first coating material comprises a polymeric material, the first coating material comprising one or more, or a co-polymer, of ethylvinylacetate (EVA) and polyvinylacetate (PVA).

27. Apparatus according to Claims 25 or 26 wherein the first coating material further includes an abrasive to provide a rough surface.

28. Apparatus according to any of Claims 25 to 27 wherein another of the coating zones comprises a second coating material, the second coating material being substantially insoluble in water.

29. Apparatus according to Claim 28 wherein another of the coating zones comprises a third coating material, the third coating material comprising a material which is soluble in saliva to protect the first and second coating layers.

30. Apparatus according to any of Claims 21 to 29 comprising first, second and third coating zones arranged sequentially of each other, with the second coating zone downstream of the first coating zone, and the third coating zone downstream of the second coating zone.

31. Apparatus according to Claim 30 wherein each coating zone comprises a respective vessel for holding a respective coating material, at least one of the vessels including a base and at least one sloping side wall extending upwardly from the base.

32. Apparatus according to any of Claims 28 to 31 comprising a drying arrangement arranged between the first and second coating zones.

33. Apparatus according to Claim 32 wherein the drying arrangement comprises a heating arrangement, which comprises an oven, through which the yarn can pass.

34. Apparatus according to Claim 33 wherein the tensioning arrangement comprises a drawing assembly down stream of the supply zone, the drawing assembly comprising a roller assembly, which comprises a first set of rollers, which are arranged up stream of the drying arrangement, and a second set of rollers, which are arranged down stream of the drying arrangement.

35. Apparatus according to Claim 34 wherein the first and second set of rollers has a draw ratio of between 1.5:1 and 10:1.

36. Apparatus according to Claim 29 wherein a cooling arrangement is provided between the second and third coating zones, and the cooling arrangement cools the molten second coating material applied to the yarn.

37. Apparatus according to any of Claims 21 to 36 wherein the storage zone comprises a plurality of storage bobbins onto which the coated yarn is wound.

38. A coated dental floss or tape comprising a texturised yarn in a tensioned condition and a coating material on the yarn to hold the yarn in the tensioned condition, the coating being water insoluble.

39. A coated dental floss or tape according to Claim 38 wherein the coating material comprises a polymeric material, the coating material comprises one or more, or a co-polymer, of ethylvinylacetate (EVA) and polyvinylacetate (PVA).

40. A coated dental floss or tape according to Claim 39 wherein the coating material includes a dispersing agent and a wetting agent.

41. A coated dental floss or tape according to any of Claims 38 to 40 wherein the coating material further includes an abrasive to provide a rough surface.

42. A coated dental floss or tape according to any of Claims 38 to 41 wherein the yarn is coated with a second coating material, the second coating material, comprising a material to prevent moisture ingress.

43. A coated dental floss or tape according to Claim 42 wherein the yarn is coated with a third coating material, the third coating material comprising a material which is soluble in saliva to protect the first and second coating layers.

44. A coated dental floss or tape according to Claim 43 wherein the third coating material comprises a wax, and includes adjuvants such as flavourings, sweeteners, active ingredients.
